# EUROPÄISCHE PATENTSCHRIFT

(11) **EP 2 719 052 B1**
(45) Veröffentlichungstag und Bekanntmachung des Hinweises auf die Patenterteilung: **21.10.2015**
(21) Anmeldenummer: 12716330.1
(22) Anmeldetag: 12.04.2012
(51) Int. Cl.: H02J 1/10, H02J 7/02, H02J 7/35, H02J 7/00

(54) **BATTERIEPAKET MIT EINER SEPARATEN ENERGIEVERSORGUNGSEINRICHTUNG FÜR EINE DRAHTLOSE KOMMUNIKATIONSEINRICHTUNG DES BATTERIEPAKETS**
BATTERY PACK HAVING A SEPARATE POWER SUPPLY DEVICE FOR A WIRELESS COMMUNICATION DEVICE OF THE BATTERY PACK
BLOC-BATTERIE ÉQUIPÉ D'UN DISPOSITIF D'ALIMENTATION EN ÉNERGIE SÉPARÉ POUR LE DISPOSITIF DE COMMUNICATION SANS FIL DU BLOC-BATTERIE

(30) Priorität: 06.06.2011 DE 102011076963
(43) Veröffentlichungstag der Anmeldung: 16.04.2014
(73) Patentinhaber: Robert Bosch GmbH, 70442 Stuttgart (DE)
(72) Erfinder: MACK, Juergen, 73035 Goeppingen (DE)
(86) Internationale Anmeldenummer: PCT/EP2012/056665
(87) Internationale Veröffentlichungsnummer: WO 2012/167974

(56) Entgegenhaltungen:
- US-A1- 2003 231 001
- US-A1- 2007 114 967
- US-A1- 2007 278 998

## Beschreibung

### Stand der Technik

Elektrogeräte können mittels aufladbaren Batterien bzw. Akkus unabhängig von externen Stromquellen betrieben werden. Je nach Anwendung werden hierzu sowohl wechselbare Batteriepakete, sogenannte Akku- bzw. Batteriepacks, als auch interne, im Gerät fest eingebaute Batterie- bzw. Akkuzellen verwendet. Das Aufladen dieser elektrischen Energiespeicher erfolgt mithilfe externer Ladegeräte. Bei einem induktiven Ladesystem wird dabei ein von einer Sendespule einer Ladestation erzeugtes magnetisches Feld für die Energieübertragung zwischen Ladestation und Batteriepaket genutzt. Die von der Empfangseinheit des Batteriepakets empfangene Energie wird dabei zum größten Teil direkt in den Batteriezellen gespeichert. Ein weitaus geringerer Anteil der übertragenen Energie wird von der Empfangseinheit als Eigenverbrauch benötigt.

Zum Aufladen wird die Batterievorrichtung in geeigneter Weise mit dem dazugehörigen Ladegerät gekoppelt, was beispielsweise durch Einsetzen der Batterievorrichtung in eine entsprechende Aufnahme der Ladestation erfolgt. Damit jedoch Energie von der Ladestation an die Empfangseinheit abgegeben werden kann, ist eine induktive Kopplung erforderlich, welche im Wesentlichen in Form von zwei aufeinander abgestimmten und üblicherweise mit einem Kern ausgestatteten Spulen ausgebildet ist. Die üblicherweise auf relativ kurze Distanzen von wenigen Millimetern bis zu einigen Zentimetern wirkende Kopplung lässt sich ferner durch resonante Ausgestaltung der Anordnung unter Beibehaltung eines relativ großen Wirkungsgrads noch weiter vergrößern.

Während der eigentlichen Energieübertragung kommunizieren Ladestation und Batteriepaket kontinuierlich miteinander, wobei mithilfe der Kommunikation im Wesentlichen die Schließung des Regelkreises realisiert wird. Dabei übermittelt das Batteriepaket bestimmte Ladeparameter an die Ladestation. Die Ladeparameter umfassen aktuelle Zustandsinformationen der jeweiligen Batterie, wie z. B. Batteriespannung, Ladestrom oder Batterietemperatur. Diese Informationen werden im Batteriepaket erfasst und über eine bestehende Kommunikationsverbindung an die Ladestation übermittelt. Im Falle eines induktiven Ladesystems erfolgt diese Übermittlung typischerweise drahtlos. Hierzu verfügt das Batteriepaket neben einer Steuer- bzw. Kontrolleinrichtung, welche die jeweiligen Ladeparameter erfasst, auch über eine entsprechende drahtlose Kommunikationseinrichtung.

Bei der drahtlosen Kommunikation zwischen Batteriepaket und Ladestation muss das Batteriepaket ununterbrochen zyklisch angepingt werden, um das Einsetzen bzw. Entnehmen des Batteriepakets aus der Ladestation sicher erkennen zu können. Dabei wird unter dem sogenannten "Anpingen" das Aussenden kurzer Energiepulse bzw. Telegramme von der Ladestation zum Batteriepack verstanden. Bei eingesetztem Batteriepaket antwortet dieses ebenfalls mit einem entsprechenden Telegramm. Zur der initialen Kommunikation zwischen Batteriepaket und Ladestation, die im Vorfeld des eigentlichen Ladevorgangs stattfindet, benötigen die Kommunikationseinrichtung und die Steuer- bzw. Kontrolleinrichtung der Batterievorrichtung entsprechende elektrische Energie. Diese Energie darf nicht aus den Batteriezellen entnommen werden, da dies eventuell zu einer Tiefenentladung der Batteriezellen führen könnte, welche unbedingt zu vermeiden ist. Darüber hinaus muss sichergestellt werden, dass die Kommunikation auch noch bei einem bereits tief entladenen Batteriepaket funktioniert. Aus diesem Grund sind im Stand der Technik vor allem solche Konzepte bekannt, bei denen durch kurzes Anlegen eines kontinuierlichen magnetischen Wechselfeldes oder durch Aussenden kurzer energiereicher Impulse (sogenanntes "Pingen"), die zur initialen Kommunikation benötigte Energie an die Batterievorrichtung übertragen wird. Diese Realisierungsformen haben vor allem den entscheidenden Nachteil, dass von der Ladestation stets ein magnetisches Feld ausgestrahlt wird, welches zu einer unnötigen Leistungsaufnahme im Stand-by-Modus führt. Des Weiteren ist bei solchen Ausführungen ein ständiges "anpingen" zwingend notwendig, um eine hinreichende Batteriepackerkennung zu gewährleisten.

Aus US 2007/014967 A1 (vergl. den Oberbegriff des Anspruchs 1) ist eine Anordnung umfassend ein mit einer Batterie betriebenes mobiles Gerät und ein Ladegerät zum Laden der Batterie des mobilen Geräts bekannt. Die Übertragung zwischen Ladegerät und mobilem Gerät erfolgt drahtlos über elektromagnetische Strahlung, wobei das Ladegerät eine Lichtquelle zum Erzeugen einer Lichtstrahlung und das mobile Gerät eine entsprechende Solarzelle zum Empfang der Lichtstrahlung aufweist. Beide Geräte verfügen ferner über drahtlose Kommunikationsschnittstellen, über welche das mobile Gerät während des Ladevorgangs mit dem Ladegerät kommuniziert. Die Kommunikationsschnittstelle des mobilen Geräts wird ausschließlich von der internen Batterie mit Energie versorgt.

Aus der US 2007/0278998 A1 ist ein mobiles Gerät einer internen elektrischen Schnittstelle zum Laden der Batterie bekannt. Die elektrische Schnittstelle ist hierbei in Form einer Antenne zum Empfangen elektromagnetischer Strahlung ausgebildet.

Aus der US 2003/0231001 A1 ist eine Anordnung für ein mittels einer Batterie betriebenes mobiles Gerät und ein externes Ladegerät zum Laden dieser Batterie bekannt. Das Ladegerät verfügt dabei über eine Speicherbatterie, welche mittels einer Solarzelle geladen wird.

Es ist daher Aufgabe der Erfindung eine Möglichkeit zur initialen Kommunikation zwischen Batteriepaket und Ladestation bereitzustellen, ohne dass hierfür Energie aus den Batteriezellen entnommen wird und ohne dass ein ständiges magnetisches Wechselfeld von der Ladestation aufrecht erhalten werden muss. Diese Aufgabe wird durch eine Batterievorrichtung gemäß Anspruch 1 gelöst. Weitere vorteilhafte Ausführungsformen der Erfindung sind in den abhängigen Ansprüchen angegeben.

Gemäß der Erfindung ist eine Batterievorrichtung mit wenigstens einer aufladbaren Batteriezelle vorgesehen, wobei die Batterievorrichtung eine elektrische Schnittstelle für ein externes Ladegerät zum Laden der Batteriezelle und eine Kommunikationseinrichtung zum Herstellen einer Kommunikationsverbindung zum externen Ladegerät umfasst. Dabei ist ferner vorgesehen, dass die Batterievorrichtung eine separate Energieversorgungseinrichtung für die Kommunikationseinrichtung umfasst. Durch die separate Energieversorgungseinrichtung ist es möglich, die Kommunikationseinrichtung der Batterievorrichtung unabhängig von der externen Stromversorgung zu betreiben. Hierdurch entfällt die Notwendigkeit, die Sendeeinrichtung der Ladestation zum Sicherzustellen einer Erkennung der Batterievorrichtung ständig mit Energie zu versorgen. Vielmehr kann die Ladestation in dem Fall, dass keine Batterievorrichtung eingesetzt ist, nunmehr in einen energiesparsamen Bereitschaftsmodus betrieben werden. Da die Kommunikationseinrichtung der Batterievorrichtung aufgrund der separaten Energieversorgung unabhängig vom Ladezustand der Batteriezellen betrieben wird, kann die Kommunikation mit der Ladestation auch bei einer relativ tief entladenen Batteriezelle erfolgen, ohne dass die betreffende Batteriezelle durch eine weitere Energieentnahme geschädigt wird.

Gemäß der Erfindung ist vorgesehen, dass die Energieversorgungseinrichtung eine Energieernteeinrichtung und eine Energiespeichereinrichtung umfasst. Die Energieernteeinrichtung ist dabei ausgebildet, elektrische Energie aus der Umgebung der Batterievorrichtung zu gewinnen, während die Energiespeichereinrichtung ausgebildet ist, die so gewonnene elektrische Energie zu speichern.

Eine Ausführungsform sieht vor, dass die Energieernteeinrichtung ausgebildet ist, eine auf die Batterievorrichtung einwirkende elektromagnetische

Strahlung in elektrische Energie umzuwandeln. Da Strahlungsenergie im Allgemeinen ständig zur Verfügung steht, ist sie optimal geeignet, als unabhängige Energiequelle zur Energieversorgung der Kommunikationseinrichtung verwendet zu werden.

Gemäß einer weiteren Ausführungsform ist vorgesehen, dass die Energieernteeinrichtung eine photovoltaische Zelle und/oder eine Empfangsantenne für elektromagnetische Strahlung umfasst. Aufgrund ihrer relativ hohen Effizienz stellt eine photovoltaische Zelle insbesondere in gut beleuchteter Umgebung eine sehr geeignete Energiequelle dar, um relativ viel elektrische Energie für die Kommunikationseinrichtung zur Verfügung zu stellen. Aufgrund der nahezu überall vorhandenen elektromagnetischen Strahlung erlaubt eine Empfangsantenne hingegen eine kontinuierliche Energiegewinnung.

Gemäß einer weiteren Ausführungsform ist die Energieernteeinrichtung ausgebildet, eine Bewegung der Batterievorrichtung in elektrische Energie umzuwandeln. Dabei ist in einer Ausführungsform vorgesehen, dass die Energieernteeinrichtung ein piezoelektrisches Element umfasst, welches Vibrationen der Batterievorrichtung in elektrische Energie umsetzt, während die Energieernteeinrichtung in einer alternativen Ausführungsform einen elektromagnetischen Generator umfasst, welcher Bewegungen der Batterievorrichtung in elektrische Energie umsetzt. Die Nutzung von Schwingungs- bzw. Bewegungsenergie stellt insbesondere bei tragbaren Elektrogeräten, mit denen ein Benutzer während des Betriebs hantiert, eine geeignete Form der Energiegewinnung dar. Ferner erweist sich diese Form der Energiegewinnung als besonders geeignet bei Elektrowerkzeugen, die beim üblichen Gebrauch Schwingungen bzw. einer Hin- und Herbewegungen ausgesetzt sind. Dabei werden piezoelektrische Elemente vorzugsweise eingesetzt, um höherfrequente Schwingungen in elektrische Energie umzusetzen, während elektromagnetische Generatoren insbesondere niederfrequente Schwingungen und sonstige Bewegungen des Elektrogeräts effektiv in elektrische Energie umwandeln können.

Eine weitere Ausführungsform sieht vor, dass die Energieernteeinrichtung einen Thermogenerator umfasst. Mithilfe eines solchen Thermogenerators kann eine Temperaturdifferenz direkt in eine elektrische Spannung umgewandelt werden. Somit kann beispielsweise die im Betrieb der Batterievorrichtung anfallende Wärme, die sonst ungenutzt in die Umgebung abgegeben wird, sinnvoll zum Laden der Energiespeichereinrichtung genutzt werden.

In einer weiteren Ausführungsform ist vorgesehen, dass die elektrische Schnittstelle der Batterievorrichtung ausgebildet ist, Energie von einer entsprechenden elektrischen Schnittstelle des Ladegeräts drahtlos zu empfangen. Zur drahtlosen Energieübertragung zwischen Ladegerät und Batterievorrichtung kann grundsätzlich jedes geeignete Konzept verwendet werden, wie z. B. ein induktives, ein elektromagnetisches oder ein kapazitives Energieübertragungsverfahren. Die drahtlose Energieübertragung ermöglicht eine galvanische Trennung zwischen Ladestation und Batterievorrichtung. Ferner wird dadurch das Laden der Batterievorrichtung vereinfacht, da beim Einsetzen der Batterievorrichtung in die Ladestation keine besondere Ladekontaktanordnung berücksichtigt werden muss. Vielmehr kann die Batterievorrichtung in verschiedenen Positionen in die Ladeschale eingesetzt werden.

Gemäß einer weiteren Ausführungsform ist vorgesehen, dass die elektrische Schnittstelle zum Herstellen einer induktiven Kopplung mit dem externen Ladegerät ausgebildet ist. Die induktive Kopplung zwischen einer induktiven Sendespule und einer induktiven Empfangsspule ermöglicht eine besonders geeignete Energieübertragungsmethode, da hierbei Energie im Wesentlichen nur dann übertragen wird, wenn sich die induktive Empfangsspule in der Nähe der induktiven Sendespule befindet, d.h. wenn die Batterievorrichtung auch tatsächlich in der Ladeschale eingesetzt ist.

Eine weitere Ausführungsform sieht ferner vor, dass die Kommunikationseinrichtung zum Herstellen einer drahtlosen Kommunikationsverbindung mit dem externen Ladegerät ausgebildet ist. Die drahtlose Kommunikationsverbindung erlaubt der Batterievorrichtung noch vor dem Einsetzen in die Ladestation eine Kommunikation mit der Ladestation zu initiieren. Ferner kann hiermit ein komplett drahtloses Ladesystem realisiert werden, bei dem die Ladung der Batteriezelle unabhängig von der Position der Batterievorrichtung innerhalb der Ladeschale möglich ist.

In einer weiteren Ausführungsform ist vorgesehen, dass die Kommunikationseinrichtung einen Modulator zum Aufbau einer drahtlosen Kommunikationsverbindung im ISM-Band umfasst. Das ISM-Band erlaubt eine kostengünstige und sichere bidirektionale Kommunikationsverbindung.

Ferner sieht eine weitere Ausführungsform vor, dass die Kommunikationseinrichtung ausgebildet ist von der Steuereinrichtung der Batterievorrichtung bereitgestellte Ladeparameter der Batteriezelle über die drahtlose Kommunikationsverbindung an das Ladegerät zu senden. Hierdurch wird der Regelkreis drahtlos geschlossen. Die komplett drahtlose Kopplung zwischen Batterievorrichtung und Ladegerät erhöht unter anderem die Sicherheit sowie die Handhabung des Ladesystems.

Schließlich ist gemäß einer weiteren Ausführungsform vorgesehen, dass die Energieversorgungseinrichtung ausgebildet ist, die Steuereinrichtung mit elektrischer Energie zu versorgen. Hierdurch wird es der Batterievorrichtung möglich, bereits bei der initialen Kommunikation mit dem Ladegerät Informationen zu übermitteln, anhand derer das Ladegerät die Batterievorrichtung identifizieren kann. Damit kann einerseits erreicht werden, dass die Batterievorrichtung nicht fälschlicherweise an einem dafür ungeeigneten Ladegerät geladen wird. Anodererseits kann mithilfe der initialen Identifikation erreicht werden, dass das Ladegerät sein Ladeverhalten unterschiedlichen Batterievorrichtungen individuell anpasst.

Im Folgenden wird die Erfindung anhand von Figuren näher dargestellt. Es zeigen:
Fig. 1 eine Anordnung umfassend eine erfindungsgemäße Batterievorrichtung und eine externe Ladestation, wobei die Batterievorrichtung eine Kommunikationseinrichtung und eine über eine photovoltaische Energieernteeinrichtung mit elektrischer Energie versorgte separate Energiespeichereinrichtung umfasst; und
Fig. 2 eine alternative Ausführungsform der erfindungsgemäßen Batterievorrichtung aus Figur 1, wobei die Energieernteeinrichtung ein piezoelektrisches Element zum Erzeugen elektrischer Energie aus Vibrationen der Batterievorrichtung umfasst.

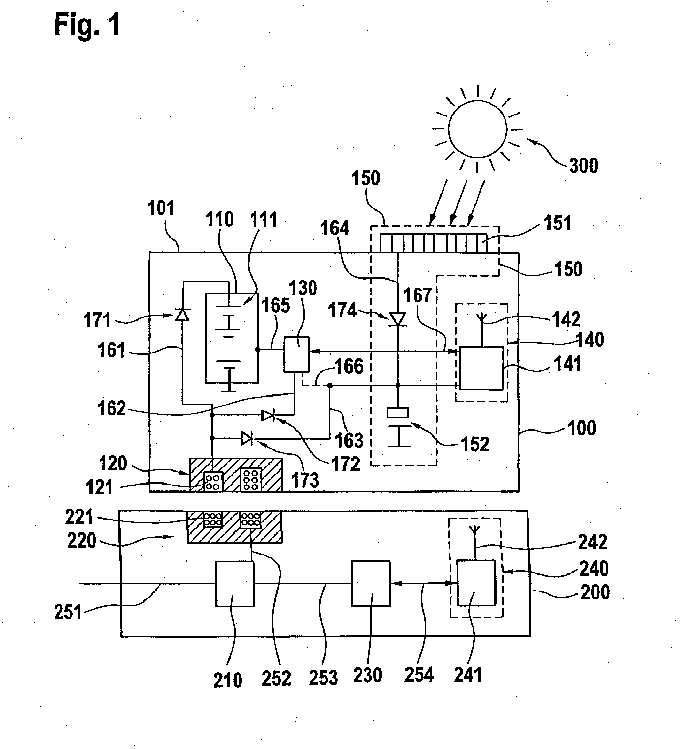

Die Figur 1 zeigt eine Anordnung bestehend aus einer Batterievorrichtung 100 mit wiederaufladbaren Batteriezellen sowie eines zugehörigen Ladegeräts 200, welches in Form einer Ladestation 200 mit einer Aufnahme für die Batterievorrichtung 100 ausgebildet ist. Bei der Batterievorrichtung 100 handelt es sich beispielsweise um ein sogenanntes Batteriepack bzw. Akkupack, welches in Geräten verschiedenster Art zum Einsatz kommt. Die Batterievorrichtung 100 kann jedoch auch als ein kompaktes elektrisches Gerät mit integrierten Batteriezellen ausgebildet sein, wie z. B. eine elektrische Zahnbürste. Wie aus der Figur 1 ersichtlich, umfasst die Batterievorrichtung 100 eine erste Energiespeichereinrichtung 110, welche insbesondere als eine aufladbare Batterie bzw. Akku ausgebildet ist, eine elektrische Schnittstelle 120 zum Laden der ersten Energiespeichereinrichtung 110, eine Steuer- bzw. Kontrolleinrichtung 130 zum Ermitteln der Ladeparameter bzw. des Zustands der ersten Energiespeichereinrichtung, eine Kommunikationseinrichtung 140 zum Aufbau einer Kommunikationsverbindung mit der zugehörigen Ladestation 200. Erfindungsgemäß umfasst die Batterievorrichtung 100 auch eine separate Energieversorgungseinrichtung 150 zur unabhängigen Energieversorgung der Kommunikationseinrichtung 140.

Die Energiespeichereinrichtung 110 umfasst wenigstens eine aufladbare Batteriezelle 111. Je nach Bedarf können mehrere einzelne Batteriezellen 111, wie in Figur 1 der Fall, in Reihe geschaltet werden, um eine gewünschte Leistung bzw. Spannung zu erreichen. Als Batteriezelle kann grundsätzlich jeder geeignete Batterietyp in Frage kommen, wie z. B. Lithiumionen-, Lithiumpolymere-, Nickelmetallhydrid- oder Bleioxid-Zellen. Ferner können die Energiespeicherzellen 111 auch auf Basis von Kondensatoren aufgebaut sein.

Das Batteriepaket 100 wird vorzugsweise induktiv geladen. Induktives Laden von Akku- bzw. Batteriepacks oder Endgeräten mit fest eingebauten aufladbaren Batteriezellen nutzt das magnetische Feld für die Energieübertragung zwischen Ladestation (Sendeeinheit) und Batteriepack (Empfangseinheit). Bei einem induktiven Ladesystem umfasst die elektrische Schnittstelle 120 der Batterievorrichtung 100 eine induktive Empfangsspule 121, welche ein von einer Sendespule 221 einer entsprechenden elektrischen Schnittstelle 220 der Ladestation 200 ausgesendetes magnetisches Wechselfeld in einen elektrischen Strom umwandelt. Wie in der Figur 1 gezeigt ist, liegen sich Sendespule 221 der Ladestation 200 und die Empfangsspule 121 der in der Ladestation 200 untergebrachten Batterievorrichtung 100 unmittelbar gegenüber. Um eine möglichst optimale induktive Kopplung der beiden Spulen zu erreichen, beträgt der Abstand zwischen den Spulen typischer Weise wenige Millimeter bis Zentimeter. Zur Verbesserung der induktiven Kopplung zwischen den beiden Spulen können ferner auf beiden Seiten ferromagnetische Kerne vorgesehen sein.

Die während der Energieübertragung von der Empfangsspule 121 der Batterievorrichtung 100 bereitgestellte Wechselspannung wird über die Verbindungsleitung 161 und einen Gleichrichter 171 in die Energiespeichereinrichtung 110 eingekoppelt. Die Diode 171 stellt dabei auch sicher, dass die Energiespeichereinrichtung 110 nach einer Ladephase nicht über die elektrische Leitung 161 entladen wird. Während der Energieübertragung wird die von der Empfangspule 121 bereitgestellte Wechselspannung ferner mithilfe des Gleichrichters 173 gleichgerichtet und über die Leitung 163 dem Kondensator 152 zusätzlich zum "energy-harvesting" zugeführt.

Um den Ladevorgang zu steuern, wird der Regelkreis über eine zwischen der Batterievorrichtung 100 und der Ladestation 200 aufgebaute Kommunikationsverbindung geschlossen. Hierzu ermittelt eine interne Steuer- bzw. Kontrolleinrichtung 130, welche mittels einer weiteren Verbindungsleitung 165 an die Energiespeichereinrichtung 110 angeschlossen ist, kontinuierlich aktuelle Zustandsinformationen der Batteriezellen 110 und gibt diese Ladeparameter über eine bidirektionale Datenleitung 167 an die Kommunikationseinrichtung 140 weiter. Als Ladeparameter werden beispielsweise die aktuelle Batteriespannung, der aktuelle Ladestrom oder die aktuelle Batterietemperatur erfasst. Zwecks Energieversorgung ist die Steuereinrichtung 130 im vorliegenden Ausführungsbeispiel über die Leitung 162 und den Gleichrichter 172 an der Hauptstromleitung 161 der Batterievorrichtung 100 angeschlossen. Ferner ist die Steuereinrichtung 130 zwecks Energieversorgung über die Verbindungsleitung 166 an die Energieversorgungseinrichtung 150 bzw. mit einer Verbindungsleitung 163, welche die Energieversorgungseinrichtung 150 mit der elektrischen Schnittstelle 120 verbindet, angeschlossen.

Zum Schließen des Regelkreises wird im vorliegenden Fall eine drahtlose Kommunikationsverbindung zwischen der Batterievorrichtung 100 und der Ladestation 200 aufgebaut und die Ladeparameter bzw. die geforderte Stellgröße über diese Kommunikationsverbindung vom Batteriepaket an die Ladestation übertragen. Die Kommunikationseinrichtung 140 der Batterievorrichtung 100 umfasst dabei im Wesentlichen einen Modulator 141, der vorzugsweise im sogenannten ISM-Band (Industrial, Scientific and Medical band) arbeitet, sowie eine entsprechende Sendeantenne 142. Analog hierzu weist die Ladestation 200 eine interne Kommunikationseinrichtung 240 mit einem entsprechende Modulator 241 und einer entsprechenden Empfangsantenne 242 auf. Die von der Kommunikationseinrichtung 240 der Ladestation 200 empfangenen Ladeparameter werden dabei über eine bidirektionale Datenverbindung 254 an eine Steuereinrichtung 230 weitergegeben, welche über die Leitung 253 ein leistungselektronisches Stellglied 210 ansteuert, um die Sendespule 221 der elektrischen Schnittstelle 220 mit Energie zu versorgen. Ferner ist die Leistungselektronik 210 mit der elektrischen Schnittstelle über die Leitung 252 verbunden. Die Stromversorgung der Leistungselektronik 210 wird dabei typischerweise über eine externe Eingangsleitung 251 sichergestellt. Die Steuereinrichtung 230 ist dabei vorzugsweise ausgebildet, die Leistungselektronik 210 nur dann anzusteuern, wenn die Kommunikationsschnittstelle 240 der Ladestation 200 eine entsprechende Anfrage von der Kommunikationseinrichtung 140 der Batterievorrichtung 100 erhält. Hierdurch wird ein Energiesparmodus der Ladestation 200 realisiert, bei dem das magnetische Wechselfeld von der induktiven Sendespule 221 der Ladestation 200 nur während eines Ladevorgangs erzeugt wird.

Bei der Batterievorrichtung 100 erfolgt die Stromversorgung der Steuer- bzw. Kontrolleinrichtung 130 sowie der Kommunikationseinrichtung 140 während eines Ladevorgangs vorzugsweise mit Hilfe der von der elektrischen Schnittstelle 120 der Batterievorrichtung zur Verfügung gestellten elektrischen Energie. Da diese Stromquelle der Steuereinrichtung 130 und der Kommunikationseinrichtung 140 jedoch nur während eines Ladevorgangs zur Verfügung steht, wird die zur initialen Kommunikation mit der Ladestation 200 benötigte Energie erfindungsgemäß von einer internen Energieversorgungseinrichtung 150 bereitgestellt. Diese Energieversorgungseinrichtung 150 umfasst eine Energieernteeinrichtung 151 und eine zusätzliche Energiespeichereinrichtung 152 mit wenigstens einem wiederaufladbaren Energiespeicher zum Zwischenspeichern der mithilfe der Energieernteeinrichtung 151 erzeugten elektrischen Energie. Als Energiespeicher dient dabei vorzugsweise ein spezieller Kondensator, z. B. ein sogenannter Ultra- bzw. Super-Kondensator.

Bei der Energieernteeinrichtung 151 handelt es sich um eine Einrichtung zum Energieernten (engl. "energy harvesting"), d. h. zur Erzeugung elektrischen Stroms aus der Umgebung der Batterievorrichtung 100. Genau genommen wird dabei eine bestimmte Energieform, wie z.B. Strahlungsenergie oder kinetische Energie, in eine andere Energieform, im vorliegenden Fall elektrische Energie, umgewandelt. Als Energiequellen kommen dabei beispielsweise Sonne, Vibrationen oder allgemein elektromagnetische Strahlung in Frage. In dem in der Figur 1 gezeigten Ausführungsbeispiel ist die Energieernteeinrichtung 151 in Form einer photovoltaischen Zelle bzw. Solarzelle ausgebildet. Diese wandelt Lichtstrahlung, beispielsweise das Licht der Sonne 300, in eine elektrische Energie um. Die Energie der Solarzelle wird dann über die elektrische Leitung 164 und über die Diode 174 in den Kondensator 152 eingekoppelt.

Andere elektromagnetische Strahlung, wie z. B. Radiowellen, lässt sich mithilfe von Empfangsantennen in ein elektrisches Signal umwandeln. Aus einem solchen elektrischen Signal kann mithilfe relativ einfacher Mittel eine elektrische Spannung zum Laden der zusätzlichen Speichereinrichtufig 152 erzeugt werden. Das Ernten der Strahlungsenergie mithilfe von Empfangsantennen liefert zwar eine deutlich geringere Energieausbeute, als der Einsatz photovoltaischer Zellen, jedoch steht diese Energiequelle praktisch rund um die Uhr zur Verfügung. Ferner können zur Erhöhung der Effizienz der Energieernteeinrichtung 151 auch mehrere Empfangsantennen verwendet werden. Die vorzugsweise entlang des Gehäuses der Batterievorrichtung angeordneten Empfangsantennen können dabei jeweils für dieselbe Strahlung oder aber für Strahlung verschiedener Frequenzen ausgebildet sein.

Um eine sichere und zweifelsfreie Erkennung (Identifikation) der Batterievorrichtung zu gewährleisten, kann eine redundante und bidirektionale Übertragung verwendet werden.

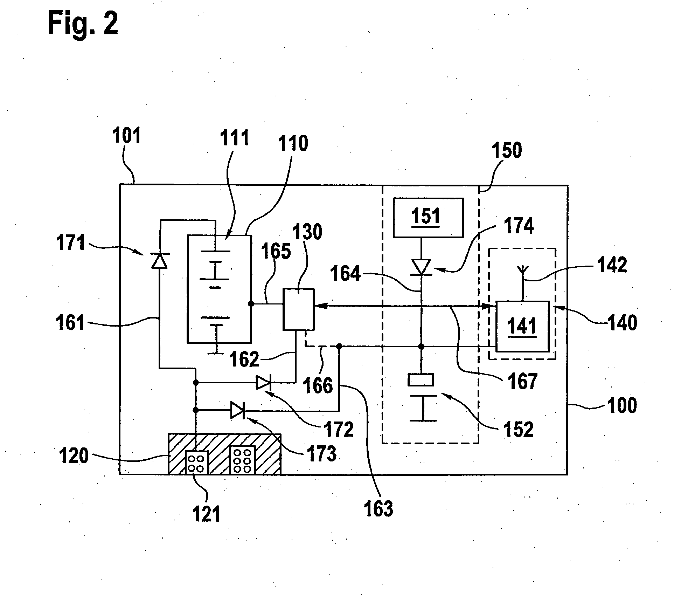

Die Figur 2 zeigt eine weitere Ausführungsform der erfindungsgemäßen Batterievorrichtung 100. Bei dieser Variante umfasst die Energieversorgungseinrichtung 150 als Energieernteeinrichtung 151 ein piezoelektrisches Element zum Erzeugen elektrischer Energie aus Vibrationen der Batterievorrichtung. Dabei wird der piezoelektrische Effekt genutzt, wonach eine Kompression eines piezoelektrischen Kristalls eine Potentialdifferenz an gegenüberliegenden Seiten des Kristalls bewirkt. Anstatt des piezoelektrischen Elements 151 kann zur Gewinnung elektrischer Energie aus der Bewegung der Batterievorrichtung 100 auch ein elektromagnetischer Generator verwendet werden. Ein solcher Generator kann dabei in Form eines Spulenpakets ausgebildet sein, in welchem ein Permanentmagnet beweglich gelagert ist. Durch die Hin- und Herbewegung des Permanentmagneten wird innerhalb der Spule eine elektrische Spannung induziert. Auch die umgekehrte Konstellation, nämlich ein relativ zu einem ortsfesten Permanentmagneten bewegliches Spulenpakets führt zu einer entsprechenden Spannungsinduktion innerhalb der Spule.

Neben den im Zusammenhang mit den beiden Figuren 1 und 2 beschriebenen Energieernte-Konzepten kann grundsätzlich jede Form der Energiegewinnung mittels Energy-Harvesting zur Energieversorgung der Kommunikationseinrichtung 140 bzw. der Steuereinrichtung 130 verwendet werden. So können beispielsweise auch Thermogeneratoren eingesetzt werden, um die während des Betriebs der Batterievorrichtung anfallende Wärme sinnvoll zu nutzen. Bei einem solchen Thermogenerator handelt es sich um ein thermoelektrisches Bauelement, welches nach dem inversen Peltier-Effekt arbeitet. Dabei setzt der Thermogenerator eine Temperaturdifferenz in eine elektrische Spannung um. Um eine effiziente Energiegewinnung zu erreichen, kann der typischerweise in Dünnschichtform ausgebildete Thermogenerator möglichst nahe an den Batteriezellen der Batterievorrichtung angeordnet werden. Jedoch ist es auch möglich, die an den Batteriezellen anfallende Wärme beispielsweise mittels Wärmeleitelementen an einen abseits der Batteriezellen angeordneten Thermogenerator zu leiten.

Obwohl das erfinderische Konzept in der vorstehenden Beschreibung lediglich im Zusammenhang mit austauschbaren Batterie- oder Akkupacks beschrieben wurde, bezieht sich die Erfindung grundsätzlich auch auf fest installierte Akku- bzw. Batteriezellen. Es ist ferner im Sinne der Erfindung das erfinderische Konzept nicht nur auf die bekannten Batterie- bzw. Akkutypen einzuschränken. Vielmehr kommt hierfür grundsätzlich jede geeignete Energiespeichertechnologie infrage, die im Zusammenhang mit dem beschriebenen induktiven Ladeverfahren verwendbar ist. Auch können mehrere der hier vorgestellten Energieerntekonzepte gemeinsam in einer Batterievorrichtung vorgesehen werden, um eine besonders effiziente Energiegewinnung zu realisieren. Schließlich eignet sich die hier beschriebene Energieversorgung mittels Energy-Harversting grundsätzlich auch für andere Konzepte der drahtlosen Energieübertragung zwischen Ladestation und Batterievorrichtung, wie z.B. mittels Luftspulen, kapazitiv, elektromagnetisch, etc..

## Patentansprüche

1. Batterievorrichtung (100) mit wenigstens einer aufladbaren Batteriezelle (110) umfassend:
- eine elektrische Schnittstelle (120) zum Laden der Batteriezelle (110) an einem externen Ladegerät (200),
- eine Kommunikationseinrichtung (140) zur drahtlosen Kommunikation mit dem externen Ladegerät (200);
- eine von der Batteriezelle (110) und der elektrischen Schnittstelle (120) unabhängige Energieversorgungseinrichtung (150) zur Energieversorgung der Kommunikationseinrichtung (140) während einer initialen Kommunikation mit dem externen Ladegerät (200),
- **dadurch gekennzeichnet, dass** die Energieversorgungseinrichtung (150) eine Energieernteeinrichtung (151) und eine Energiespeichereinrichtung (152) umfasst, wobei die Energieernteeinrichtung (151) ausgebildet ist, elektrische Energie aus der Umgebung der Batterievorrichtung (100) zu gewinnen, und wobei die Energiespeichereinrichtung (1,52) ausgebildet ist, die gewonnene elektrische Energie unabhängig von der Batteriezelle (110) zu speichern.

2. Batterievorrichtung (100) nach Anspruch 1, **dadurch gekennzeichnet, dass** die Energieernteeinrichtung (151) ausgebildet ist, eine auf die Batterievorrichtung (100) einwirkende elektromagnetische Strahlung in elektrische Energie umzuwandeln.

3. Batterievorrichtung (100) nach Anspruch 2, **dadurch gekennzeichnet, dass** die Energieernteeinrichtung (151) eine photovoltaische Zelle und/oder eine Empfangsantenne für elektromagnetische Strahlung umfasst.

4. Batterievorrichtung (100) nach einem der vorhergehenden Ansprüche, **dadurch gekennzeichnet, dass** die Energieernteeinrichtung (151) ausgebildet ist, eine Bewegung der Batterievorrichtung (100) in elektrische Energie umzuwandeln.

5. Batterievorrichtung (100) nach Anspruch 4, **dadurch gekennzeichnet, dass** die Energieernteeinrichtung (151) ein piezoelektrisches Element und/oder einen elektromagnetischen Generator umfasst.

6. Batterievorrichtung (100) nach einem der vorhergehenden Ansprüche, **dadurch gekennzeichnet, dass** die Energieernteeinrichtung (151) einen Thermogenerator umfasst.

7. Batterievorrichtung (100) nach einem der vorhergehenden Ansprüche, **dadurch gekennzeichnet, dass** die elektrische Schnittstelle (120) eine induktive Empfangsspule (121) zum Herstellen einer induktiven Kopplung mit einer entsprechenden induktiven Sendespule (221) des externen Ladegeräts (200) umfasst.

8. Batterievorrichtung (100) nach einem der vorhergehenden Ansprüche, **dadurch gekennzeichnet, dass** die Kommunikationseinrichtung (140) einen Modulator (141) zum Aufbau einer drahtlosen Kommunikationsverbindung im ISM-Band umfasst.

9. Batterievorrichtung (100) nach einem der vorhergehenden Ansprüche, **dadurch gekennzeichnet, dass** die Kommunikationseinrichtung (140) ausgebildet ist von der Steuereinrichtung (130) bereitgestellte Ladeparameter der Batteriezelle (110) über die drahtlose Kommunikationsverbindung an das Ladegerät (200) zu senden.

10. Batterievorrichtung (100) nach einem der vorhergehenden Ansprüche, **dadurch gekennzeichnet, dass** die Energieversorgungseinrichtung (150) ferner ausgebildet ist, neben der Kommunikationseinrichtung (140) auch die Steuereinrichtung (130) mit elektrischer Energie zu versorgen.

## Claims

1. Battery apparatus (100) having at least one rechargeable battery cell (110), comprising:
- an electrical interface (120) for charging the battery cell (110) from an external charger (200),
- a communication device (140) for wirelessly communicating with the external charger (200),
- an energy supply device (150), which is independent of the battery cell (110) and the electrical interface (120), for supplying energy to the communication device (140) during an initial communication operation with the external charger (200),
- **characterized in that** the energy supply device (150) comprises an energy harvesting device (151) and an energy storage device (152), wherein the energy harvesting device (151) is designed to gather electrical energy from the area surrounding the battery apparatus (100), and wherein the energy storage device (152) is designed to store the gathered electrical energy independently of the battery cell (110).

2. Battery apparatus (100) according to Claim 1, **characterized in that** the energy harvesting device (151) is designed to convert electromagnetic radiation acting on the battery apparatus (100) into electrical energy.

3. Battery apparatus (100) according to Claim 2, **characterized in that** the energy harvesting device (151) comprises a photovoltaic cell and/or a receiving antenna for electromagnetic radiation.

4. Battery apparatus (100) according to one of the preceding claims, **characterized in that** the energy harvesting device (151) is designed to convert a movement of the battery apparatus (100) into electrical energy.

5. Battery apparatus (100) according to Claim 4, **characterized in that** the energy harvesting device (151) comprises a piezoelectric element and/or an electromagnetic generator.

6. Battery apparatus (100) according to one of the preceding claims, **characterized in that** the energy harvesting device (151) comprises a thermogenerator.

7. Battery apparatus (100) according to one of the preceding claims, **characterized in that** the electrical interface (120) comprises an inductive receiving coil (121) for establishing an inductive coupling to a corresponding inductive transmitting coil (221) of the external charger (200).

8. Battery apparatus (100) according to one of the preceding claims, **characterized in that** the communication device (140) comprises a modulator (141) for establishing a wireless communication link in the ISM band.

9. Battery apparatus (100) according to one of the preceding claims, **characterized in that** the communication device (140) is designed to send charging parameters of the battery cell (110), which charging parameters are provided by the control device (130), to the charger (200) via the wireless communication link.

10. Battery apparatus (100) according to one of the preceding claims, **characterized in that** the energy supply device (150) is further designed to supply electrical energy to the control device (130) as well as to the communication device (140).

## Revendications

1. Dispositif à batterie (100) muni d'au moins une cellule de batterie rechargeable (110), comprenant :
- une interface électrique (120) destinée à charger la cellule de batterie (110) sur un chargeur externe (200),
- un appareil de communication (140) destiné à la communication sans fil avec le chargeur externe (200),
- un appareil d'alimentation en énergie (150) indépendant de la cellule de batterie (110) et de l'interface électrique (120) destiné à l'alimentation en énergie de l'appareil de communication (140) pendant une communication initiale avec le chargeur externe (200),
- **caractérisé en ce que** l'appareil d'alimentation en énergie (150) comprend un appareil de collecte d'énergie (151) et un appareil d'accumulation d'énergie (152), l'appareil de collecte d'énergie (151) étant configuré pour obtenir de l'énergie électrique depuis l'environnement du dispositif à batterie (100), et l'appareil d'accumulation d'énergie (152) étant configuré pour accumuler l'énergie électrique obtenue indépendamment de la cellule de batterie (110).

2. Dispositif à batterie (100) selon la revendication 1, **caractérisé en ce que** l'appareil de collecte d'énergie (151) est configuré pour convertir un rayonnement électromagnétique qui agit sur le dispositif à batterie (100) en énergie électrique.

3. Dispositif à batterie (100) selon la revendication 2, **caractérisé en ce que** l'appareil de collecte d'énergie (151) comprend une cellule photovoltaïque et/ou une antenne de réception pour rayonnement électromagnétique.

4. Dispositif à batterie (100) selon l'une des revendications précédentes, **caractérisé en ce que** l'appareil de collecte d'énergie (151) est configuré pour convertir un mouvement du dispositif à batterie (100) en énergie électrique.

5. Dispositif à batterie (100) selon la revendication 4, **caractérisé en ce que** l'appareil de collecte d'énergie (151) comprend un élément piézoélectrique et/ou un générateur électromagnétique.

6. Dispositif à batterie (100) selon l'une des revendications précédentes, **caractérisé en ce que** l'appareil de collecte d'énergie (151) comprend un thermogénérateur.

7. Dispositif à batterie (100) selon l'une des revendications précédentes, **caractérisé en ce que** l'interface électrique (120) comprend une bobine de réception inductive (121) destinée à établir un couplage inductif avec une bobine d'émission inductive (221) correspondante du chargeur externe (200).

8. Dispositif à batterie (100) selon l'une des revendications précédentes, **caractérisé en ce que** l'appareil de communication (140) comprend un modulateur (141) destiné à établir une liaison de communication sans fil dans la bande ISM.

9. Dispositif à batterie (100) selon l'une des revendications précédentes, **caractérisé en ce que** l'appareil de communication (140) est configuré pour envoyer les paramètres de charge de la cellule de batterie (110), mis à disposition par l'appareil de commande (130) au chargeur (200) par le biais de la liaison de communication sans fil.

10. Dispositif à batterie (100) selon l'une des revendications précédentes, **caractérisé en ce que** l'appareil d'alimentation en énergie (150) est en outre configuré pour alimenter également en énergie électrique l'appareil de commande (130), en plus de l'appareil de communication (140).
